# EUROPEAN PATENT SPECIFICATION

(11) **EP 1 736 395 B1**
(45) Date of publication and mention of the grant of the patent: **25.11.2009**
(21) Application number: 06076168.1
(22) Date of filing: 06.06.2006
(51) Int. Cl.: B62D 1/18

(54) **Screw driven power telescoping and tilt mechanism for steering column**
Spindeltrieb bei der Kipp- und Teleskopverstellung für eine Lenksäule
Dispositif de transfert à transmission vis-écrou pour réglage de colonne de direction de véhicule

(30) Priority: 20.06.2005 US 156409
(43) Date of publication of application: 27.12.2006
(73) Proprietor: Delphi Technologies, Inc., Troy, Michigan 48007 (US)
(72) Inventor: Li, Xiaoyu, Saginaw, MI 48603 (US); Riefe, Richard K., Saginaw, MI 48609 (US)
(74) Representative: Denton, Michael John

(56) References cited:
- EP-A- 0 834 437
- PATENT ABSTRACTS OF JAPAN vol. 1999, no. 02, 26 February 1999 (1999-02-26) -& JP 10 297503 A (TOYOTA MOTOR CORP), 10 November 1998 (1998-11-10)
- PATENT ABSTRACTS OF JAPAN vol. 2000, no. 24, 11 May 2001 (2001-05-11) -& JP 2001 199350 A (TOYOTA MOTOR CORP), 24 July 2001 (2001-07-24)
- PATENT ABSTRACTS OF JAPAN vol. 2003, no. 12, 5 December 2003 (2003-12-05) -& JP 2005 082148 A (NACAM FRANCE SAS), 31 March 2005 (2005-03-31)

## Description

### TECHNICAL FIELD

The present invention relates to a tilting and telescoping steering column assembly for a vehicle and more specifically to a system for driving motion of the steering column.

### BACKGROUND OF THE INVENTION

Vehicles can be equipped with steering columns that adjust the position of the steering wheel to enhance the comfort and safety of the driver. For example, the steering column can telescope to move closer to and away from the driver. Also, the position of the steering wheel can be tilted relative to other components of the column. These features together operate to enable the driver to adjust the steering wheel to a desired, convenient position for operating the vehicle, and for enabling the wheel to be moved out of the way to provide greater access to getting into and out of the driver's seat of the vehicle.

EP 0 834 437 and JP 10 297 503 discloses an assembly in accordance with the preamble of Claim 1.

### SUMMARY OF THE INVENTION

The invention provides a single drive mechanism for controlling the telescoping movement of the steering column as well as the tilting movement of the steering column. The invention provides a steering column assembly for a vehicle. The steering column assembly includes a lower steering column jacket for attachment to a vehicle. The steering column assembly also includes an upper steering column jacket engaged with the lower steering column jacket for telescoping movement along a longitudinal axis to support a steering wheel in a desired longitudinal position. The steering column assembly also includes a tilt housing engaged with the upper steering column jacket for tilting movement about a tilt axis to support the steering wheel in a desired angular position. The steering column assembly also includes a screw drive operably disposed relative to the lower steering column jacket. The screw drive includes a motor and a screw driven in rotation by the motor. The screw defines a centered, longitudinal screw axis. The steering column assembly also includes a nut assembly selectively engageable with the screw and fixedly engaged with the upper steering column jacket for controlling the telescoping movement.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a longitudinal cross-sectional view of a first embodiment of a single drive mechanism according to the present invention;
Figure 2 is a detail view taken along detail lines 2 - 2 in Figure 1;
Figure 3 is a longitudinal cross-sectional view of a second embodiment of a single drive mechanism according to the present invention; and
Figure 4 is a cross-sectional view taken along section lines 4 - 4 in Figure 3.

### DESCRIPTION OF THE PREFERRED EMBODIMENT

A plurality of different embodiments of the invention are shown in the Figures of the application. Similar features are shown in the various embodiments of the invention. Similar features have been numbered with a common reference numeral and have been differentiated by an alphabetic designation. Also, to enhance consistency, features in any particular drawing share the same alphabetic designation even if the feature is shown in less than all embodiments. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

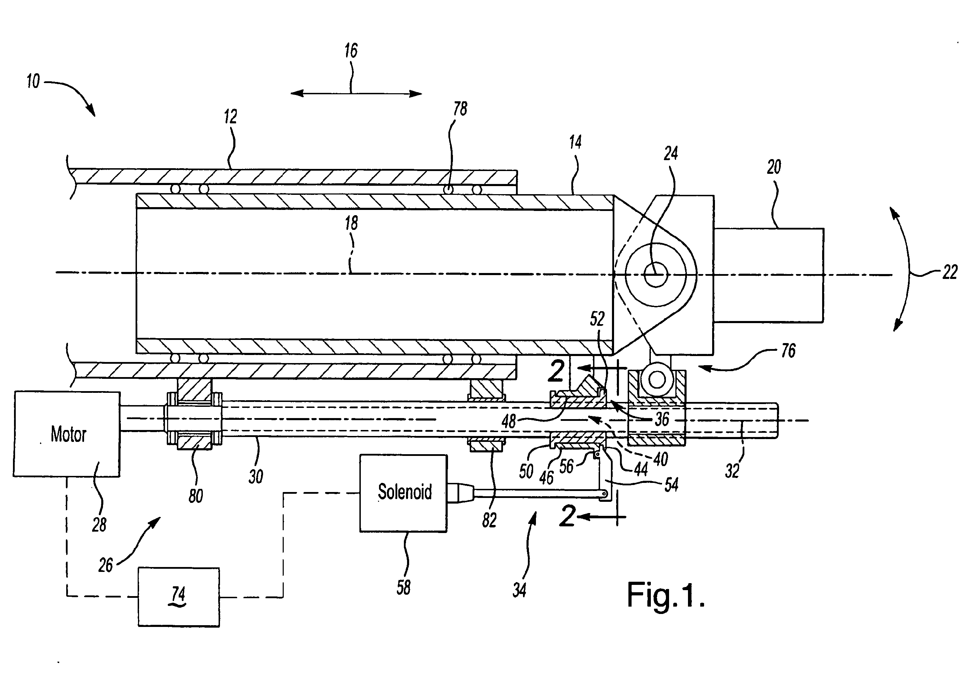

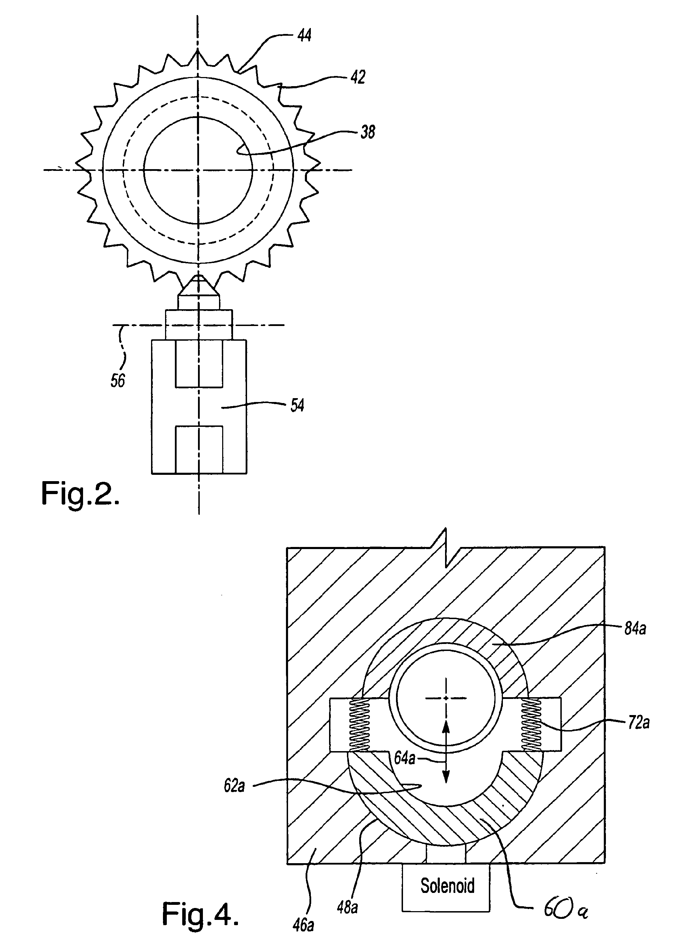

Referring to Figures 1 and 2, in a first exemplary embodiment of the invention, a steering column assembly 10 for a vehicle includes a lower steering column jacket 12 for attachment to a vehicle. An upper steering column jacket 14 is engaged with the lower steering column jacket 12 for telescoping movement 16 along a longitudinal axis 18. The lower and upper steering column jackets 12, 14 cooperate to support a steering wheel of the vehicle in a desired longitudinal position relative to the centered column axis 18. A plurality of bearings, such as bearings 78, can be disposed between the lower and upper steering column jackets 12, 14 to enhance sliding movement between the lower and upper steering column jackets 12, 14 by reducing friction, for example.

The steering column assembly 10 also includes a tilt housing 20 engaged with the upper steering column jacket 14 for tilting movement 22 about a tilt axis 24. The upper steering column jacket 14 and the tilt housing 20 cooperate to support the steering wheel in a desired angular position relative to the column axis 18.

The steering column assembly 10 also includes a screw drive 26 operably disposed relative to the lower steering column jacket 12. The screw drive 26 includes a motor 28 and a screw 30 driven in rotation by the motor 28. The screw 30 defines a centered, longitudinal screw axis 32. In the exemplary embodiment of the invention, the motor 28 is fixed relative to the lower steering column jacket 12 and the screw axis 32 extends parallel to the column axis 18. The screw 30 is supported rotation by first and second fixtures 80, 82 that are fixed to the lower steering column jacket 12. Thrust bearings are disposed on opposite sides of each fixture 80, 82 to prevent the screw 30 from moving relative to the fixture 80, 82 along the axis 32.

The steering column assembly 10 also includes a nut assembly 34 selectively engageable with the screw 30. The nut assembly 34 is fixedly engaged with the upper steering column jacket 14. When the nut assembly 34 is engaged with the screw 30 and the screw 30 is rotating, the upper steering column jacket 14 moves along the axis 18 relative to the lower steering column jacket 12. For example, the upper steering column jacket 14 telescopes outwardly from the lower steering column jacket 12 in response to rotation of the screw 30 in a first angular direction. Similarly, the upper steering column jacket 14 telescopes into the lower steering column jacket 12 in response to rotation of the screw 30 in a second angular direction opposite the first angular direction. When the nut assembly 34 is not engaged with, or is spaced from, the screw 30 and the screw 30 is rotating, the upper steering column jacket 14 and the lower steering column jacket 12 do not otherwise move relative to one another. However, when the nut assembly 34 is spaced from the screw 30 and the screw 30 is rotating, the upper steering column jacket 14 and the tilt housing 20 pivot relative to one another, as will be set forth below. When the nut assembly 34 is engaged with the screw 30 and the screw 30 is rotating, the upper steering column jacket 14 and the tilt housing 20 do not pivot relative to one another, as will be set forth below.

The nut assembly 34 of the first exemplary embodiment includes a sleeve member 36 having a first aperture 38 defining internal threads 40 engaging the screw 30 and a plurality of radially outwardly facing teeth 42. The exemplary internal threads 40 continuously engage threads defined on the radially outwardly facing surface of the screw 30. The exemplary sleeve member 36 includes a body portion 42 defining the first aperture 38 and an annular flange 44 extending from the body portion 42 and defining the plurality of radially outwardly facing teeth 42. The nut assembly 34 also includes a collar member 46 fixedly engaged with the upper steering column jacket 14 and defining a second aperture 48 receiving the sleeve member 36. A body portion 42 of the sleeve member 36 is slidably received in the second aperture 48. First and second thrust bearing portions 50, 52 disposed on opposite sides of the body portion 42 to prevent the body portion 42 from moving axially relative to the collar member 46.

The nut assembly 34 also includes a latch 54 pivotally engaged with the collar member 46 for pivoting movement about a pivot axis 56 between a locked position and an unlocked position. The exemplary pivot axis 56 extends perpendicular to the screw axis 32. In the locked position, shown in Figures 1 and 2, the latch 54 substantially fixedly engages the plurality of radially outwardly facing teeth 42 to fixedly engage the latch 54 and the sleeve member 36 and the collar member 46 with respect one another. The latch 54 and the sleeve member 36 and the collar member 46 and the upper steering column jacket 14 move along the axis 18 in response to rotation of the screw 30 when the latch 54 is in the locked position. In the unlocked position, the latch 54 is spaced from the plurality of radially outwardly facing teeth 42 and the sleeve member 36 rotates in the second aperture 48 when the screw 30 rotates.

The steering column assembly 10 also includes an actuator 58 to move the latch 54 between the locked and unlocked positions. The actuator 58 is engaged with an end of the latch 54 spaced from the pivot axis 56. The exemplary actuator 58 is a solenoid. The steering column assembly 10 also includes a controller 74 disposed to control the actuator 34 to selectively engage the screw 30. The controller 74 can also control the motor 28.

The steering column assembly 10 also includes a screw nut 76 engaged with the screw 30 to move along the screw axis 32 in response to rotation of the screw 30. The screw nut 76 is continuously engaged with the screw 30 and cooperates with the tilt housing 20 such that the tilt housing 20 tilts about the tilt axis 24 in response to movement of the screw nut 76 along the screw axis 32. A rigid structural member is disposed between the tilt housing 20 and the screw nut 76 and is spaced from the tilt axis 24 to convert linear movement of the screw nut 76 along the axis 32 to tilting movement 22 of tilt housing 20 about the tilt axis 24. When the nut assembly 34 is engaged with the screw 30, the tilt housing 20 and the upper steering column jacket 14 move together along the axis 18 and, as result, tilting movement 22 will not occur. However, when the nut assembly 34 is not engaged with the screw 30, only the tilt housing 20 moves and, as result, tilting movement 22 will occur.

The nut assembly 34 and the screw nut 76 are selectively spaced from one another along the screw axis 32. The nut assembly 34 and the screw nut 76 can move closer together and further apart from one another along the screw axis 32, based on the operation of the nut assembly 34. For example, if the nut assembly 34 is disengaged with respect to the screw 30 and the screw 30 is rotated in a first angular direction, the screw nut 76 can move away from the nut assembly 34 along the axis 32. Similarly, if the nut assembly 34 is disengaged with respect to the screw 30 and the screw 30 is rotated in a second angular direction opposite the first angular direction, the screw nut 76 can move closer to the nut assembly 34 along the axis 32.

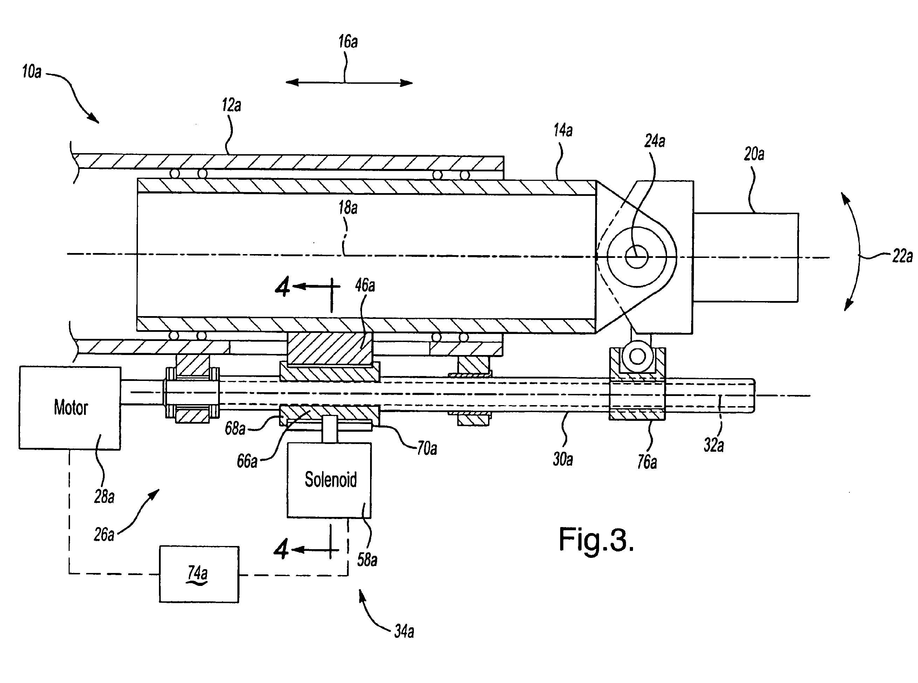

Referring to Figures 3 and 4, in a second exemplary embodiment of the invention, a steering column assembly 10a for a vehicle includes a lower steering column jacket 12a for attachment to a vehicle. An upper steering column jacket 14a is engaged with the lower steering column jacket 12a for telescoping movement 16a along a longitudinal axis 18a. The lower and upper steering column jackets 12a, 14a cooperate to support a steering wheel of the vehicle in a desired longitudinal position relative to the centered column axis 18a. The steering column assembly 10a also includes a tilt housing 20a engaged with the upper steering column jacket 14a for tilting movement 22a about a tilt axis 24a. The upper steering column jacket 14a and the tilt housing 20a cooperate to support the steering wheel in a desired angular position relative to the column axis 18a. The steering column assembly 10a also includes a screw drive 26a operably disposed relative to the and having a motor 28a and a screw 30a driven in rotation by the motor 28a and having a centered, longitudinal screw axis 32a. The steering column assembly 10a also includes a nut assembly 34a selectively engageable with the screw 30a. The nut assembly 34a is fixedly engaged with the upper steering column jacket 14a.

The second exemplary nut assembly 34a includes a channel member 60a defining radially inwardly facing threads 62a. The threads 62a selectively engage the threads defined on the radially outwardly facing surface of the screw 30a. The nut assembly 34a includes a collar member 46a defining a second aperture 48a receiving the channel member 60a. The channel member 60a includes a channel portion 66a defining the radially inwardly facing threads 62a and third and fourth thrust bearing portions 68a, 70a disposed on opposite sides of the channel portion 66a to prevent the channel portion 66a from moving axially relative to the collar member 46a.

The channel member 60a is moveable in the second aperture 48a along a travel axis 64a extending perpendicular to the screw axis 32a. The channel 60a moves between a first position and a second position. At least one biasing device 72a is disposed in the second aperture 48a and urges the channel member 60a to the second position. In the first position, the radially inwardly facing threads 62a engage the screw 30a. The channel member 60a and the collar member 46a and the upper steering column member 14a move along the axis 18a in response to rotation of the screw 30a. In the second position, shown in Figure 4, the radially inwardly facing threads 62a are spaced from the screw 30a. The screw 30a rotates relative to the collar member 46a and the channel member 60a and the lower and upper steering column jackets 12a, 14a do not move relative to one another. The second exemplary embodiment of the invention includes a bearing 84a supporting the screw 30a during rotation of the screw 30a.

The steering column assembly 10a also includes an actuator 58a. The actuator 58a is engaged with the channel member 60a and is operable to move the channel member 60a between the first position and the second position. The second exemplary actuator 58a is a solenoid. The steering column assembly 10a also includes a controller 74a disposed to control the actuator 34a to selectively engage the screw 30a. The controller 74a can also control the motor 28a.

The steering column assembly 10a also includes a screw nut 76a engaged with the screw 30a to move along the screw axis 32a in response to rotation of the screw 30a. The screw nut 76a is continuously engaged with the screw 30a and cooperates with the tilt housing 20a such that the tilt housing 20a tilts about the tilt axis 24a in response to movement of the screw nut 76a along the screw axis 32a. A rigid structural member is disposed between the tilt housing 20a and the screw nut 76a and is spaced from the tilt axis 24a to convert linear movement of the screw nut 76a along the axis 32a to tilting movement 22a of tilt housing 20a about the tilt axis 24a. When the nut assembly 34a is engaged with the screw 30a, the tilt housing 20a and the upper steering column jacket 14a move together along the axis 18a and, as result, tilting movement 22a will not occur. However, when the nut assembly 34a is not engaged with the screw 30a, only the tilt housing 20a moves during rotation of the screw 30a and, as result, tilting movement 22a will occur.

## Claims

1. A steering column assembly (10, 10a) comprising:
a lower steering column jacket (12, 12a) for attachment to a vehicle;
an upper steering column jacket (14, 14a) engaged with said lower steering column jacket (12, 12a) for telescoping movement (16, 16a) along a longitudinal axis (18, 18a) for supporting a steering wheel in a desired longitudinal position relative to said lower steering column jacket (12, 12a);
a tilt housing (20, 20a) engaged with said upper steering column jacket (14, 14a) for tilting movement (22, 22a) about a tilt axis (24, 24a) for supporting the steering wheel in a desired angular position relative to said upper steering column jacket (14, 14a);
a screw drive (26, 26a) operably disposed relative to said lower steering column jacket (12, 12a) and having a motor (28, 28a) and a screw (30, 30a) driven in rotation by said motor (28, 28a) and having a screw axis (32, 32a);
a nut assembly (34, 34a) selectively engageable with said screw (30, 30a) and fixedly engaged with said upper steering column jacket (14, 14a) for controlling said telescoping movement (16, 16a)
**characterized in that** said nut assembly (34a) further comprises:
a channel member (60a) defining radially inwardly facing threads (62a) selectively engagable with said screw (30a).

2. The steering column assembly (10) of claim 1 wherein said nut assembly (34) further comprises:
a sleeve member (36) having a first aperture (38) defining internal threads (40) engaging said screw (30) and a plurality of radially outwardly facing teeth (42).

3. The steering column assembly (10) of claim 2 wherein said sleeve member (36) includes a body portion (42) defining said first aperture (38) and an annular flange (44) extending from said body portion (42) and defining said plurality of radially outwardly facing teeth (42).

4. The steering column assembly (10) of claim 2 wherein said nut assembly (34) further comprises:
a collar member (46) fixedly engaged with said upper steering column jacket (14) and defining a second aperture (48) receiving said sleeve member (36).

5. The steering column assembly (10) of claim 4 wherein said sleeve member (36) further comprises:
a body portion (42) slidably received in said second aperture (48); and
first and second thrust bearing portions (50, 52) disposed on opposite sides of said body portion (42) and preventing said body portion (42) from moving axially relative to said collar member (46).

6. The steering column assembly (10) of claim 4 wherein said nut assembly (34) further comprises:
a latch (54) pivotally engaged with said collar member (46) for pivoting movement about a pivot axis (56) between a locked position wherein said latch (54) substantially fixedly engages said plurality of radially outwardly facing teeth (42) and an unlocked position wherein said latch (54) substantially is spaced from said plurality of radially outwardly facing teeth (42).

7. The steering column assembly (10) of claim 6 wherein said pivot axis (56) extends perpendicular to said screw axis (32).

8. The steering column assembly (10) of claim 6 wherein said latch (54) and said sleeve member (36) and said collar member (46) are fixedly engaged with one another when said latch (54) is in said locked position.

9. The steering column assembly (10) of claim 8 further comprising:
an actuator (58) engaged with said latch (54) and operable to move said latch (54) between said locked position and said unlocked position.

10. The steering column assembly (10) of claim 9 wherein said actuator (58) is further defined as a solenoid.

11. The steering column assembly (10a) of claim 1 wherein said nut assembly (34a) further comprises:
a collar member (46a) defining a second aperture (48a) receiving said channel member (60a).

12. The steering column assembly (10a) of claim 11 wherein said channel member (60a) is moveable in said second aperture (48a) along a travel axis (64a) extending perpendicular to said screw axis (32a) between a first position wherein said radially inwardly facing threads (62a) engage said screw (30a) and a second position wherein said radially inwardly facing threads (62a) are spaced from said screw (30a).

13. The steering column assembly (10a) of claim 12 wherein said channel member (60a) further comprises:
a channel portion (66a) defining said radially inwardly facing threads (62a); and
third and fourth thrust bearing portions (68a, 70a) disposed on opposite sides of said channel portion (66a) and preventing said channel portion (66a) from moving axially relative to said collar member (46a).

14. The steering column assembly (10a) of claim 12 further comprising:
at least one biasing device (72a) urging said channel member (60a) to said second position.

15. The steering column assembly (10a) of claim 12 further comprising:
an actuator (58a) engaged with said channel member (60a) and operable to move said channel member (60a) between said first position and said second position.

16. The steering column assembly (10a) of claim 15 wherein said actuator (58a) is further defined as a solenoid.

17. The steering column assembly (10, 10a) of claim 1 further comprising:
a controller (74, 74a) disposed to control said nut assembly (34, 34a) to selectively engage said screw (30, 30a).

18. The steering column assembly (10) of claim 1 further comprising:
a screw nut (76, 76a) engaged with said screw (30, 30a) to move along said screw axis (32, 32a) in response to rotation of said screw (30, 30a) and cooperating with said tilt housing (20, 20a) such that said tilt housing (20, 20a) tilts about said tilt axis (24, 24a) in response to movement of said screw nut (76, 76a) along said screw axis (32, 32a).

19. The steering column assembly (10) of claim 18 wherein said nut assembly (34, 34a) and said screw nut (76, 76a) are selectively spaced from one another along said screw axis (32, 32a).

## Patentansprüche

1. Lenksäulenanordnung (10, 10a), die aufweist:
ein unteres Lenksäulenrohr (12, 12a) zur Befestigung an einem Fahrzeug;
ein oberes Lenksäulenrohr (14, 14a), das mit dem unteren Lenksäulenrohr (12, 12a) in Eingriff steht für eine Teleskop- bzw. Ineinanderschieben-Bewegung (16, 16a) entlang einer Längsachse (18, 18a) zum Halten eines Lenkrads in einer gewünschten Längsposition relativ zu dem unteren Lenksäulenrohr (12, 12a);
ein Kippgehäuse (20, 20a), das in Eingriff steht mit dem oberen Lenksäulenrohr (14, 14a) für eine Kippbewegung (22, 22a) über eine Kippachse (24, 24a) zum Halten des Lenkrads in einer gewünschten Winkelposition relativ zu dem oberen Lenksäulenrohr (14, 14a);
ein Spindeltrieb (26, 26a), der betriebsfähig relativ zu dem unteren Lenksäulenrohr (12, 12a) angeordnet ist und einen Motor (28, 28a) und eine Spindel bzw. Schraube (30, 30a) hat, die in Drehung durch den Motor (28, 28a) angetrieben wird und eine Schraubenachse (32, 32a) hat;
eine Muttemanordnung (34, 34a), die selektiv in Eingriff gebracht werden kann mit der Schraube (30, 30a) und fest in Eingriff steht mit dem oberen Lenksäulenrohr (14, 14a), zum Steuern der ineinanderschiebenden Bewegung (16, 16a),
**dadurch gekennzeichnet, dass** die Muttemanordnung (34a) weiter aufweist:
ein Führungselement (60a), das radial nach innen zeigende Windungen (62a) definiert, die mit der Schraube (30a) in Eingriff gebracht werden können.

2. Lenksäulenanordnung (10) gemäß Anspruch 1, wobei die Muttemanordnung (34) weiter aufweist:
ein Hülsenelement (36) mit einer ersten Öffnung (38), das Innengewinde (40) definiert, mit denen die Schraube (30) in Eingriff steht, und einer Vielzahl von radial nach außen stehenden Zähnen (42).

3. Lenksäulenanordnung (10) gemäß Anspruch 2, wobei das Hülsenelement (36) einen Körperabschnitt (42) umfasst, der die erste Öffnung (38) definiert, und einen ringförmigen Flansch (44), der sich von dem Körperabschnitt (42) weg erstreckt und die Vielzahl von nach außen stehenden Zähne (42) definiert.

4. Lenksäulenanordnung (10) gemäß Anspruch 2, wobei die Muttemanordnung (34) weiter aufweist:
ein Bundelement (46), das fest in Eingriff steht mit dem oberen Lenksäulenrohr (14) und eine zweite Öffnung (48) definiert zum Aufnehmen des Hülsenelements (36).

5. Lenksäulenanordnung (10) gemäß Anspruch 4, wobei das Hülsenelement (36) weiter aufweist:
einen Körperabschnitt (42), der verschiebbar in der zweiten Öffnung (48) aufgenommen ist; und
erste und zweite Axiallager-Abschnitte (50, 52), die auf gegenüberliegenden Seiten des Körperabschnitts (42) angeordnet sind und verhindern, dass sich der Körperabschnitt (42) axial relativ zu dem Bundelement (46) bewegt.

6. Lenksäulenanordnung (10) gemäß Anspruch 4, wobei die Muttemanordnung (34) weiter aufweist:
eine Verriegelung (54), die drehbar in Eingriff steht mit dem Bundelement (46) für eine Drehbewegung über eine Drehachse (56) zwischen einer verriegelten Position, in der die Verriegelung (54) im Wesentlichen die Vielzahl von radial nach außen stehenden Zähnen (42) fest in Eingriff bringt, und einer entriegelten Position, in der die Verriegelung (54) im Wesentlichen von der Vielzahl von radial nach außen stehenden Zähnen (42) mit Abstand vorgesehen ist.

7. Lenksäulenanordnung (10) gemäß Anspruch 6, wobei sich die Drehachse (56) senkrecht zu der Schraubenachse (32) erstreckt.

8. Lenksäulenanordnung (10) gemäß Anspruch 6, wobei die Verriegelung (54) und das Hülsenelement (36) und das Bundelement (46) fest miteinander in Eingriff stehen, wenn die Verriegelung (54) in der verriegelten Position ist.

9. Lenksäulenanordnung (10) gemäß Anspruch 8, die weiter aufweist:
einen Aktuator (58), der mit der Verriegelung (54) in Eingriff steht und betriebsfähig ist, die Verriegelung (54) zwischen der verriegelten Position und der entriegelten Position zu bewegen.

10. Lenksäulenanordnung (10) gemäß Anspruch 9, wobei der Aktuator (58) weiter als ein Solenoid definiert ist.

11. Lenksäulenanordnung (10a) gemäß Anspruch 1, wobei die Muttemanordnung (34a) weiter aufweist:
ein Bundelement (60a), das eine zweite Öffnung (48a) zur Aufnahme des Führungselements (60a) definiert.

12. Lenksäulenanordnung (10a) gemäß Anspruch 11, wobei das Führungselement (60a) in der zweiten Öffnung (48a) entlang einer Bewegungsachse (64a), die sich senkrecht zu der Schraubenachse (32a) erstreckt, zwischen einer ersten Position, in der die radial nach innen zeigenden Windungen (62a) mit der Schraube (30a) in Eingriff stehen, und einer zweiten Position bewegbar ist, in der die radial nach innen zeigenden Windungen (62a) von der Schraube (30a) mit Abstand vorgesehen sind.

13. Lenksäulenanordnung (10a) gemäß Anspruch 12, wobei das Führungselement (60a) weiter aufweist:
einen Führungsabschnitt (66a), der die radial nach innen zeigenden Windungen (62a) definiert; und
dritte und vierte Axiallager-Abschnitte (68a, 70a), die auf gegenüberliegenden Seiten des Führungsabschnitts (66a) angeordnet sind und verhindern, dass sich der Führungsabschnitt (66a) relativ zu dem Bundelement (46a) axial bewegt.

14. Lenksäulenanordnung (10a) gemäß Anspruch 12, die weiter aufweist:
zumindest eine beeinflussende Vorrichtung (72a), die das Führungselement (60a) in die zweite Position drückt.

15. Lenksäulenanordnung (10a) gemäß Anspruch 12, die weiter aufweist:
einen Aktuator (58a), der mit dem Führungselement (60a) in Eingriff steht und betriebsfähig ist, das Führungselement (60a) zwischen der ersten Position und der zweiten Position zu bewegen.

16. Lenksäulenanordnung (10a) gemäß Anspruch 15, wobei der Aktuator (58a) weiter als ein Solenoid definiert ist.

17. Lenksäulenanordnung (10, 10a) gemäß Anspruch 1, die weiter aufweist:
eine Steuervorrichtung (74, 74a), die angeordnet ist, um die Muttemanordnung (34, 34a) zu steuern, um die Schraube (30, 30a) selektiv in Eingriff zu bringen.

18. Lenksäulenanordnung (10) gemäß Anspruch 1, die weiter aufweist:
eine Schraubenmutter (76, 76a), die mit der Schraube (30, 30a) in Eingriff steht, um sich entlang der Schraubenachse (32, 32a) zu bewegen als Reaktion auf eine Rotation der Schraube (30, 30a), und mit dem Kippgehäuse (20, 20a) derart zusammenarbeitet, dass das Kippgehäuse (20, 20a) um die Kippachse (24, 24a) kippt als Reaktion auf eine Bewegung der Schraubenmutter (76, 76a) entlang der Schraubenachse (32, 32a).

19. Lenksäulenanordnung (10) gemäß Anspruch 18, wobei die Muttemanordnung (34, 34a) und die Schraubenmutter (76, 76a) selektiv mit Abstand voneinander entlang der Schraubenachse (32, 32a) vorgesehen sind.

## Revendications

1. Ensemble formant colonne de direction (10, 10a) comprenant :
une chemise de colonne de direction inférieure (12, 12a) destinée à être attachée à un véhicule ;
une chemise de colonne de direction supérieure (14, 14a) engagée avec ladite chemise de colonne de direction inférieure (12, 12a) pour un mouvement télescopique (16, 16a) le long d'un axe longitudinal (18, 18a) pour supporter un volant de direction dans une position longitudinale désirée par rapport à ladite chemise de colonne de direction inférieure (12, 12a) ;
un boîtier basculant (20, 20a) engagé avec ladite chemise de colonne de direction supérieure (14, 14a) pour un mouvement de basculement (22, 22a) autour d'un axe de basculement (24, 24a) pour supporter le volant de direction dans une position angulaire désirée par rapport à ladite chemise de colonne de direction supérieure (14, 14a) ;
un entraînement à vis (26, 26a) fonctionnellement disposé par rapport à ladite chemise de colonne de direction inférieure (12, 12a) et ayant un moteur (28, 28a) et une vis (30, 30a) entraînée en rotation par ledit moteur (28, 28a) et ayant un axe de vis (32, 32a) ;
un ensemble à écrou (34, 34a) sélectivement engageable avec ladite vis (30, 30a) et engagé de manière fixe avec ladite chemise de colonne de direction supérieure (14, 14a) pour commander ledit mouvement télescopique (16, 16a),
**caractérisé en ce que** le dit ensemble à écrou (34a) comprend en outre :
un élément en canal (60a) définissant des filets (62a) tournés radialement vers l'intérieur et sélectivement engageables avec ladite vis (30a).

2. Ensemble formant colonne de direction (10) selon la revendication 1, dans lequel ledit ensemble à écrou (34) comprend en outre :
un élément de fourreau (36) ayant une première ouverture (38) définissant des filets internes (40) qui engagent ladite vis (30) et une pluralité de dents (42) orientées radialement vers l'extérieur.

3. Ensemble formant colonne de direction (10) selon la revendication 2, dans lequel ledit élément de fourreau (36) inclut une portion de corps (42) définissant ladite première ouverture (38) et une bride annulaire (44) qui s'étend depuis ladite portion de corps (42) et qui définit ladite pluralité de dents (42) orientées radialement vers l'extérieur.

4. Ensemble formant colonne de direction (10) selon la revendication 2, dans lequel ledit ensemble à écrou (34) comprend en outre :
un élément de collier (46) engagé de manière fixe avec ladite chemise de colonne de direction supérieure (14) et définissant une seconde ouverture (48) recevant ledit élément de fourreau (36).

5. Ensemble formant colonne de direction (10) selon la revendication 4, dans lequel ledit élément de fourreau (36) comprend en outre :
une portion de corps (42) reçue en coulissement dans ladite seconde ouverture (48) ; et
une première et une seconde portion d'encaissement de poussée (50, 52) disposées sur des côtés opposés de ladite portion de corps (42) et empêchant à ladite portion de corps (42) de se déplacer axialement par rapport audit élément de collier (46).

6. Ensemble formant colonne de direction (10) selon la revendication 4, dans lequel ledit ensemble à écrou (34) comprend en outre :
un verrou (54) engagé en pivotement avec ledit élément de collier (46) pour un mouvement de pivotement autour d'un axe de pivot (56) entre une position verrouillée dans laquelle ledit verrou (54) engage de manière sensiblement fixe ladite pluralité de dents (42) orientées radialement vers l'extérieur, et une position déverrouillée dans laquelle ledit verrou (54) est sensiblement espacé depuis ladite pluralité de dents (42) orientées radialement vers l'extérieur.

7. Ensemble formant colonne de direction (10) selon la revendication 6, dans lequel ledit axe de pivot (56) s'étend perpendiculairement audit axe de vis (32).

8. Ensemble formant colonne de direction (10) selon la revendication 6, dans lequel ledit verrou (54) et ledit élément de fourreau (36) et ledit élément de collier (46) sont engagés de manière fixe les uns avec les autres quand ledit verrou (54) est dans ladite position verrouillée.

9. Ensemble formant colonne de direction (10) selon la revendication 8, comprenant en outre :
un actionneur (58) engagé avec ledit verrou (54) et dont la fonction est de déplacer ledit verrou (54) entre ladite position verrouillée et ladite position déverrouillée.

10. Ensemble formant colonne de direction (10) selon la revendication 9, dans lequel ledit actionneur (58) est en outre défini comme un solénoïde.

11. Ensemble formant colonne de direction (10a) selon la revendication 1, dans lequel ledit ensemble à écrou (34a) comprend en outre :
un élément de collier (46a) définissant une seconde ouverture (48a) recevant ledit élément en canal (60a).

12. Ensemble formant colonne de direction (10a) selon la revendication 11, dans lequel ledit élément en canal (60a) est mobile dans ladite seconde ouverture (48a) le long d'un axe de déplacement (64a) s'étendant perpendiculairement audit axe de vis (32a) entre une première position dans laquelle lesdits filets (62a) tournés radialement vers l'intérieur engagent ladite vis (30a) et une seconde position dans laquelle lesdits filets (62a) tournés radialement vers l'intérieur sont espacés de ladite vis (30a).

13. Ensemble formant colonne de direction de (10a) selon la revendication 12, dans lequel ledit élément en canal (60a) comprend en outre :
une portion en canal (66a) définissant lesdits filets tournés radialement vers l'intérieur (62a) ; et
une troisième et une quatrième portion d'encaissement de poussée (68a, 70a) disposées sur des côtés opposés de ladite portion en canal (66a) et empêchant ladite portion en canal (66a) de se déplacer axialement par rapport audit élément en collier (46a).

14. Ensemble formant colonne de direction (10a) selon la revendication 12, comprenant en outre :
au moins un dispositif de sollicitation (72a) qui force ledit élément en canal (60a) vers ladite seconde position.

15. Ensemble formant colonne de direction (10a) selon la revendication 12, comprenant en outre :
un actionneur (60 58a) engagé avec ledit élément en canal (60a) et dont la fonction est de déplacer ledit élément en canal (60a) entre ladite première position et ladite seconde position.

16. Ensemble formant colonne de direction (10a) selon la revendication 15, dans lequel ledit actionneur (58a) est en outre défini comme un solénoïde.

17. Ensemble formant colonne de direction (10, 10a) selon la revendication 1, comprenant en outre :
un contrôleur (74, 74a) disposé pour commander ledit ensemble à écrou (34, 34a) pour engager sélectivement ladite vis (30, 30a).

18. Ensemble formant colonne de direction (10) selon la revendication 1, comprenant en outre :
un écrou (76, 76a) engagé avec ladite vis (30, 30a) pour se déplacer le long dudit axe de vis (32, 32a) en réponse à une rotation de ladite vis (30, 30a) et coopérant avec ledit boîtier basculant (20, 20a) de telle façon que ledit boîtier basculant (20, 20a) bascule autour dudit axe de basculement (24, 24a) en réponse au mouvement dudit écrou (76, 76a) le long dudit axe de vis (32, 32a)

19. Ensemble formant colonne de direction (10) selon la revendication 18, dans lequel ledit ensemble à écrou (34, 34a) et ledit écrou (76, 76a) sont sélectivement espacés l'un de l'autre le long dudit axe de vis (32, 32a).
